# EUROPÄISCHE PATENTANMELDUNG

(11) **EP 0 997 802 A1**
(43) Veröffentlichungstag der Anmeldung: **03.05.2000**
(21) Anmeldenummer: 98119956.5
(22) Anmeldetag: 21.10.1998
(51) Int. Cl.: G05B 19/42

(54) **Verfahren zum Durchführen einer Lehrfahrt eines Handhabungsgerätes**

(71) Anmelder: WITTMANN KUNSTSTOFFGERÄTE Ges.m.b.H., A-1220 Wien (AT)
(72) Erfinder: Chladt,Robert-Andreas, 1220 Wien (AT)
(74) Vertreter: Hehenberger, Reinhard, Dipl.-Ing.

(57) **Zusammenfassung**

Um das Programmieren von Handhabungsgeräten, damit diese vollautomatisch z.B. Spritzgußteile (11) aus einer geöffneten Form einer Spritzgießmaschine entnehmen, möglichst einfach und übersichtlich zu gestalten und einer Bedienungsperson, die eine Lehrfahrt für das Handhabungsgerät durchführen soll, dennoch Möglichkeiten einzuräumen den Bewegungsablauf möglichst variabel an die jeweiligen Bedürfnisse anpassen zu können, wird ein Verfahren zum Durchführen einer Lehrfahrt eines Handhabungsgerätes angegeben, bei dem das Handhabungsgerät mittels einer Eingabeeinrichtung entlang eines vorgegebenen Bewegungsablaufes bewegt wird. Das Verfahren ist dadurch gekennzeichnet, daß zuerst ein Bewegungsablauf des Handhabungsgerätes aus wenigstens zwei vorgegebenen Bewegungsabläufen ausgewählt wird und daß das Handhabungsgerät anschließend mittels der Eingabeeinrichtung entlang des ausgewählten Bewegungsablaufes bewegt wird, während der gesamte ausgewählte Bewegungsablauf an einem Bildschirm (10) einer Anzeigeeinrichtung schematisch angezeigt wird.

## Beschreibung

Die Erfindung betrifft ein Verfahren mit den Merkmalen des Oberbegriffes des Anspruches 1.

Das Programmieren von Handhabungsgeräten, damit diese vollautomatisch z.B. Spritzgußteile aus einer geöffneten Form einer Spritzgießmaschine entnehmen, ist grundsätzlich relativ aufwendig bzw. kompliziert und kann, wenn keine besonderen Maßnahmen getroffen werden, üblicherweise nur von gut geschulten Personal durchgeführt werden. Damit der Einsatz dieses gut geschulten Personals, das üblicherweise vom Hersteller der Maschine bereitgestellt wird, so weit wie möglich vermieden werden kann, werden derartige Handhabungsgeräte fallweise bereits mit einer Steuerung ausgeliefert, in der ein grundlegender Bewegungsablauf des Handhabungsgerätes vorprogrammiert ist, wobei durch diesen vorprogrammierten Bewegungsablauf eine konkrete Abfolge von Bewegungen in X-, Y- und Z-Richtung sowie gegebenfalls Drehbewegungen um bestimmte Achsen eines Greifers des Handhabungsgerätes vorgegeben ist. Der Kunde bzw. Benutzer des Handhabungsgerätes muß dann nur mehr im Rahmen einer Lehrfahre die Koordinaten der einzelnen Bewegungen eingeben, um den Bewegungsablauf für einen bestimmten Arbeitsprozeß festzulegen.

Eine derartige Lehrfahrt kann z.B. so durchgeführt werden, däß das Handhabungsgerät mittels einer Eingabeeinrichtung gesteuert dem vorgegebenen Bewegungsablauf folgt und die Koordinaten der einzelnen Bewegungen im Rahmen des gesamten Bewegungsablaufes gespeichert werden.

Ein Problem beim Durchführen der Lehrfahrt durch nicht besonders geschultes Personal liegt darin, daß die Lehrfahrt mit sehr großer Aufmerksamkeit durchgeführt werden muß, damit die Bedienungsperson nicht den "Überblick" verliert, weicher Abschnitt des Bewegungsablaufes gerade durchlaufen wird. Dies ist insbesondere kritisch, wenn die Bedienungsperson während der Lehrfahrt gestört wird.

Der Erfindung liegt daher die Aufgabe zugrunde, eine Möglichkeit zu schaffen, die einer Bedienungsperson einen besseren Überblick über den Ablauf der Lehrfahrt ermöglicht.

Gelöst wird diese Aufgabe bei einem gattungsgemäßen Verfahren dadurch, daß der ausgewählte Bewegungsablauf an einem Bildschirm einer Anzeigeeinrichtung schematisch angezeigt wird. Da der gesamte ausgewählte Bewegungsablauf angezeigt wird, während die Lehrfahrt durchgeführt wird, kann die Bedienungsperson leichter den Überblick über den Ablauf der Lehrfahrt behalten.

Diese Kontrolle kann erfindungsgemäß noch weiter dadurch erleichtert werden, daß der Abschnitt des Bewegungsablaufes, den das Handhabungsgerät gerade durchläuft, hervorgehoben dargestellt wird, wobei insbesondere bevorzugt ist, wenn der Abschnitt des Bewegungsablaufes, den das Handhabungsgerät gerade durchläuft, blinkend dargestellt wird.

Durch die hervorgehobene bzw. blinkende Darstellung des gerade durchlaufenen Abschnittes des Bewegungsablaufes behält die Bedienungsperson sehr einfach und zuverlässig den Überblick über den Ablauf der Lehrfahrt, wobei es auch keine Rolle spielt, wenn die Bedienungsperson gestört wird oder die Lehrfahrt für längere Zeit unterbrochen wird.

Es ist auch möglich, noch nicht definierte Abschnitte des Bewegungsablaufes z.B. durch strichpunktierte Linien darzustellen. Nach deren Definition im Zuge der Lehrfahrt werden diese Abschnitte dann mit durchgehenden Linien angezeigt.

Das eingangs beschriebene, bekannte System weist den weiteren erheblichen Nachteil auf, daß der Benutzer keine Möglichkeit hat, vom vorgegebenen Bewegungsablauf, d.h. der konkreten Aufeinanderfolge von Bewegungen in X-, Y- und Z-Richtung, bzw. Arbeitsablauf einschließlich der vorprogrammierten Schnittstellen zu Peripheriegeräten abzuweichen, sondern er nur die Koordinaten, d.h. das Ausmaß der Bewegung bestimmen kann. Falls in Rahmen des grundsätzlichen Bewegungsablaufes eine Änderung erforderlich ist oder auch nur die Reihenfolge dar Bewegungen in X-, Y- und Z-Richtung geändert werden soll, ist es erforderlich, in der Steuerung den neuen Bewegungsablauf zu programmieren, wofür wieder entsprechend ausgebildetes Personal, meist vom Hersteller der Maschine, erforderlich ist, was zeit- und kostenaufwendig ist.

Der Erfindung liegt daher die weitere Aufgabe zugrunde, ein Verfahren zum Durchführen einer Lehrfahrt eines Handhabungsgerätes zur Verfügung zu stellen, bei dem auch nicht besonders geschulten Personal verbesserte Möglichkeiten gegeben werden, den Bewegungsablauf eines Handhabungsgerätes zu ändern.

Gelöst wird diese Teilaufgabe dadurch, daß zuerst ein Bewegungsablauf des Handhabungsgerätes aus wenigstens zwei vorgegebenen Bewegungsabläufen ausgewählt wird und daß das Handhabungsgerät anschließend mittels der Eingabeeinrichtung entlang des ausgewählten Bewegungsablaufes bewegt wird.

Erfindungsgemäß werden dem Benutzer der Maschine wenigstens zwei, vorzugsweise mehr vorgegebene Bewegungsabläufe zur Verfügung gestellt, welche möglichst alle zu erwartenden oder vom Benutzer gewünschten Anwendungsfälle abdecken. Nachdem der Benutzer der Maschine einen für den gegebenen Anwendungsfall geeigneten Bewegungsablauf ausgewählt hat, wird auf an sich bekannte Weise die Lehrfahrt durchgeführt, worauf die Maschine bzw. das Handhabungsgerät in Betrieb genommen werden kann.

Eine Alternative zur Lösung der Teilaufgabe kann auch sein, daß an Knotenpunkten des Bewegungsablaufes eine Eingabemöglichkeit zur Änderung des Bewegungsablaufes gegeben ist, und daß nach einer Änderung der geänderte Bewegungsablauf am Bildschirm angezeigt wird.

In diesem Fall kann die Bedienungsperson vor oder während der Lehrfahrt an Knotenpunkten Änderungen des vorgegebenen Bewegungsablaufes vornehmen, wobei diese Änderungen entweder vorgegeben oder von der Bedienungsperson frei wählbar sein können. Nachdem die Änderung des Bewegungsablaufes abgeschlossen ist, wird wieder der gesamte Bewegungsablauf in der geänderten Form an der Änzeigeeinrichtung angezeigt.

Die Möglichkeit, eine Änderung des Bewegungsablaufes vornehmen zu können, kann natürlich auch dann gegeben sein, wenn die Bedienungsperson, wie weiter oben erläutert, zunächst einen vorgegebenen Bewegungsablauf aus mehreren Bewegungsabläufen ausgewählt hat, wobei dann beim ausgewählten Bewegungsablauf weitere Änderungen wie beschrieben vorgenommen werden können.

Ein weiteres Problem bei den vorgegebenen Bewegungsabläuten des Standes der Technik ist, daß an bestimmten Punkten, sogenannten Knotenpunkten, des Bewegungsablaufes über Schnittstellen eine Koordination der Aktionen des Handhabungsgerätes mit anderen Maschinen oder Maschinenteilen, z.B. einem Auswerfer für den Spritzgußteil aus der Spritzgußform, einem Förderband, einem Angußabschneider usw., erforderlich ist. Bei den vorgegebenen Bewegungsabläufen des Standes der Technik sind auch diese Schnittstellen im wesentlichen vorprogrammiert, so daß die Möglichkeit einer Änderung dieser Schnittstelle für die Bedienungsperson, wenn überhaupt, nur sehr eingeschränkt möglich ist.

Im Rahmen der Erfindung können daher insbesondere an Knotenpunkten des Bewegungsablaufes Menüs angezeigt werden, aus welchen Steuerbefehle, insbesondere für bzw. von Peripheriegeräten, ausgewählt und gespeichert werden können.

In diesen Menüs werden auf die gerade durchzuführende Tätigkeit bezogene Varianten angezeigt, wie das Handhabungsgerät über eine Schnittstelle mit einen Peripheriegerät zusammenarbeiten soll.

Um schließlich Eingriffe in die Bewegungsabläufe zu ermöglichen, die nicht vorprogrammiert bzw. in den Menüs angezeigt werden, kann schließlich noch vorgesehen sein, daß nach Beendigung der Lehrfahrt ein Quellencode erstellt wird, der editierbar und veränderbar ist. Durch einen Eingriff in den Quellencode, der nach Beendigung der Lehrfahrt automatisch erstellt wird, ist es geschultem Personal möglich, zusätzliche Veränderungen im Bewegungsablauf vorzunehmen, die nicht wie bereits beschrieben durchgeführt werden können.

Weitere Merkmale und Vorteile der Erfindung ergeben sich aus der nachfolgenen Beschreibung von Ausführungsbeispielen der Erfindung. Es zeigen: die
Fig. 1a bis 1e beispielhaft vorgegebene Bewegungsabläufe,
Fig. 2 einen ausgewählten Bewegungsablauf, die
Fig. 3 bis 12 das schrittweise Durchführen einer Lehrfahrt zum Bewegungsablauf von Fig. 2,
Fig. 13 eine Möglichkeit, um Bewegungen im Raum darzustellen und
Fig. 14 einen Stapel von schematisch dargestellten, abzulegenden Teilen, dessen Erstellung bei einer Lehrfahrt defifniert werden kann.

Die Erfindung wird an Hand des Bewegungsablaufes eines Handling-Gerätes, also einer Entnahmevorrichtung für Spritzgußteile aus Spritzgießmaschinen erläutert. Sowohl das Handling-Gerät als auch die Spritzgießmaschine weisen eine herkömmliche bzw. beliebige Bauart auf und sind daher nicht in Zeichnungen dargestellt.

Im folgenden wird daher nur auf den Bewegungsablauf des Handhabungsgerätes sowie dessen funktionelle Beziehung zu Peripheriegeräten Bezug genommen, ohne daß auf konstruktive Einzelheiten des Handhabungsgerätes der Spritzgießmaschine oder der Peripheriegeräte eingegangen wird, da diese dem Stand der Technik entsprechen.

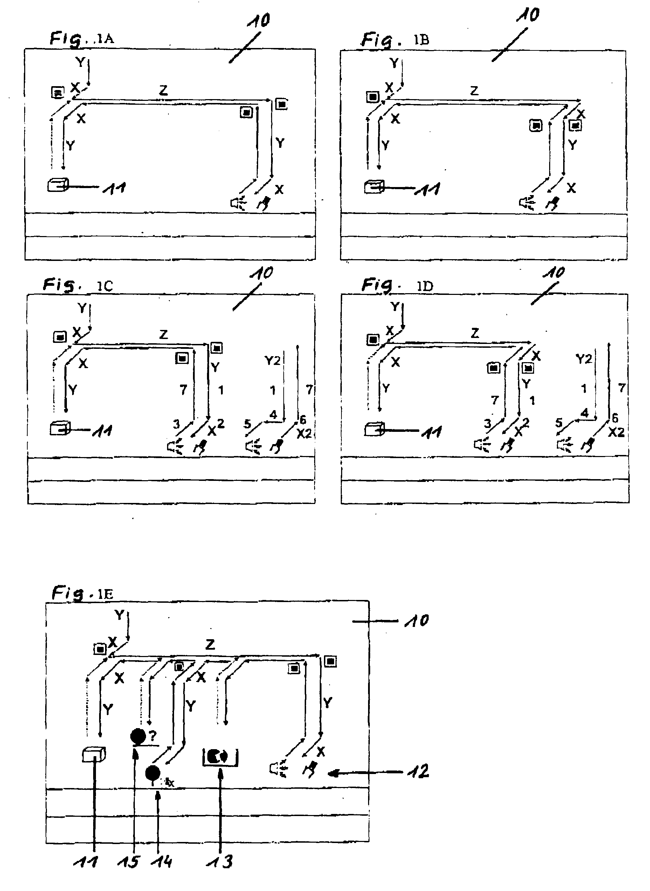

In den Fig. 1a bis 1e sind an einem symbolisch dargestellten Bildschirm 10, z.B. einem LCD-Bildschirm, beispielhafte Bewegungsabläufe dargestellt, aus welchen eine Bedienungsperson den für den jeweiligen Anwendungsfall geeignetsten Bewegungsablauf auswählen kann. Der Bewegungsablauf des Handhabungsgerätes folgt dabei den X-, Y- und Z-Achsen in Pfeilrichtung, wobei Knotenpunkte, d.h. Schnittstellen zu Peripheriegeräten, durch Symbole bzw. viereckige Kästchen 21 gekennzeichnet sind, welche in der Folge noch näher erläutert werden.

Der in Fig. 1a dargestellte Ablauf beginnt in der linken oberen Ecke des Bildschirmes 10, wobei nacheinander die Y-, X-, Z-, Y- und X-Achse durchlaufen werden. Es folgt dann die Entnahme eines Spritzgußteil; aus der Spritzgießmaschine. worauf der Greifer der Entnahmevorrichtung entlang der X-, Y- und Z-Achse zurückbewegt wird. Es folgt eine Bewegung entlang der X-, Y-Achse, worauf der Teil 11 abgelegt und dur Greifer entlang der Y- und X-Achse in die Ausgangsposition für den Automatikbetrieb weiter zurückbewegt wird.

Der Bewegungsablauf von Fig. 1b unterscheidet sich von dem in Fig. 1a dargestellten dadurch, daß zwischen der Bewegung des Greifers entlang der Z- und Y-Achse eine Bewegung in X-Richtung zwischengeschaltet wird, wie in Fig. 1b rechts oben dargestellt ist.

Gemäß Fig. 1c kann ein Bewegungsabschnitt für die Entnahme z.B. eines Angusses aus der Form hinzugefügt werden, indem parallel zum Abschnitt Y-1 (entspricht dem Bewegungsablauf von Fig. 1a) der Abschnitt Y2-1 durchlaufen wird. Die Zahlen bei den einzelnen Abschnitten geben die Reihenfolge der Bewegungen der beiden nebeneinander dargestellten Abläufe für die Entnahme eines Spritzgußteiles sowie des Angusses an.

Der Ablauf von Fig. 1d entspricht im wesentlichen dem von Fig. 1b, wobei allerdings wie in Fig. 1c eine weitere Entnahmebewegung durchgeführt wird.

In Fig. 1e schließlich sind zwischen der Entnahme 12 des Spritzgußteiles aus der Form und der Ablage des Spritzgußteiles 11 weitere Handhabungsabläufe, wie das Auswerten von Ausschußteilen bei 13, das Abschneiden von Angüssen bei 14 sowie das Ablegen an einer Stichprobenkontrolle bei 15 vorgesehen.

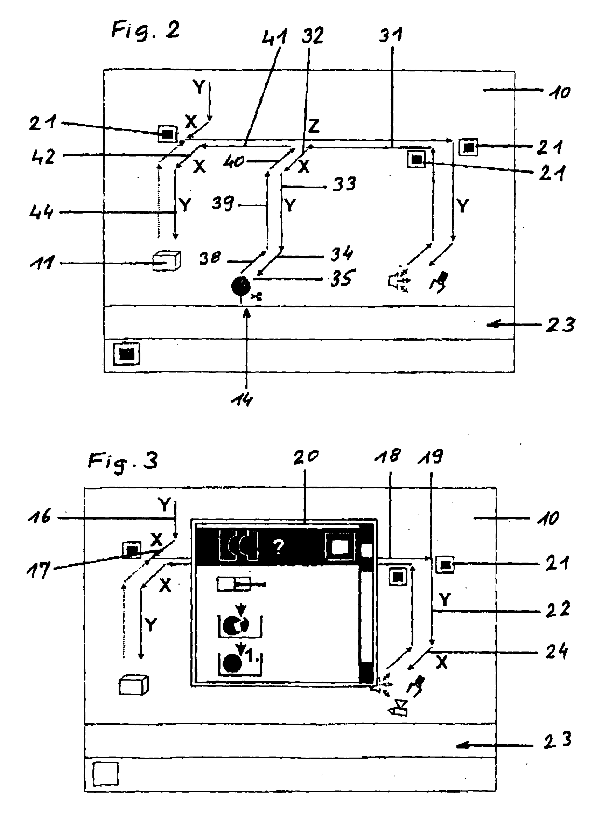

In Fig. 2 ist beispielhaft ein von der Bedienungsperson ausgewählter Ablauf dargestellt, der dem Bewegungsablauf von Fig. 1a entspricht, jedoch zusätzlich das Abschneiden eines Angusses vom Spritzgußteil. ermöglicht. In den folgenden Fig. 3 bis 12 wird der Ablauf der Lehrfahrt an Hand des in Fig. 2 dargestellten Bewegungsablaufes näher erläutert.

Zuerst wird mit Bezug auf Fig. 3 die Abschnitte 16, 17 und 18, d.h. die Y-, X- und Z-Achse entlanggefahren, indem die Bedienungsperson durch Betätigen einer Eingabeeinrichtung, wie z.B. einer Tastatur oder einem Joy-Stick, mit der Entnahmevorrichtung die Abschnitte entlang der Y-, X- und Z-Achse abfährt. Um der Bedienungsperson anzuzeigen, welcher Abschnitt gerade durchfahren wird, kann der jeweilige Abschnitt 16, 17 oder 18 z.B. blinkend oder in einer anderen Farbe dargestellt werden.

Nach Erreichen des Knotenpunktes 19, d.h. nach Bestätigung der Endposition des Abschnittes 18, wird automatisch ein Menü 20 in Form eines Fensters eingeblendet. Daß an diesem Knotenpunkt 19 ein Menüfenster eingeblendet wird, kann die Bedienungsperson im übrigen auch dem grundlegenden Bewegungsablauf gemäß Fig. 2 an Hand des viereckigen Kästchens 21 entnehmen. Im beim aktuellen Knoten 19 angezeigten Fenster 20 ist die im vorliegenden Fall einzig mögliche Option, nämlich "Form offen" durch den schwarz hinterlegten Balken des entsprechenden Symboles gekennzeichnet, so daß die Auswahl nur von der Bedienungsperson bestätigt werden muß. Vom Funktionsablauf her bedeutet dies, daß hier eine Schnittstelle zu einem Peripheriegerät (dar Form) vorgegeben ist und daß die Entnahmevorrichtung im automatischen Betrieb den Knotenpunkt 19 erst dann verlassen kann, wenn die Form tatsächlich geöffnet ist.

Nachdem die Bedienungsperson die Manüauswahl bestätigt hat, kann sie die Entnahmevorrichtung entlang des Abschnittes 22 in Y-Richtung weiterbewegan, während der Abschnitt 22 z.B. blinkend dargestellt wird. Während der Bewegung kann ebenso wie bei den vorhergehenden Abschnitten 16, 17 und 18 in der Zeile 23 des Bildschirmes 10 die Y-Position (z.B. "Y 700,0") angezeigtwerden.

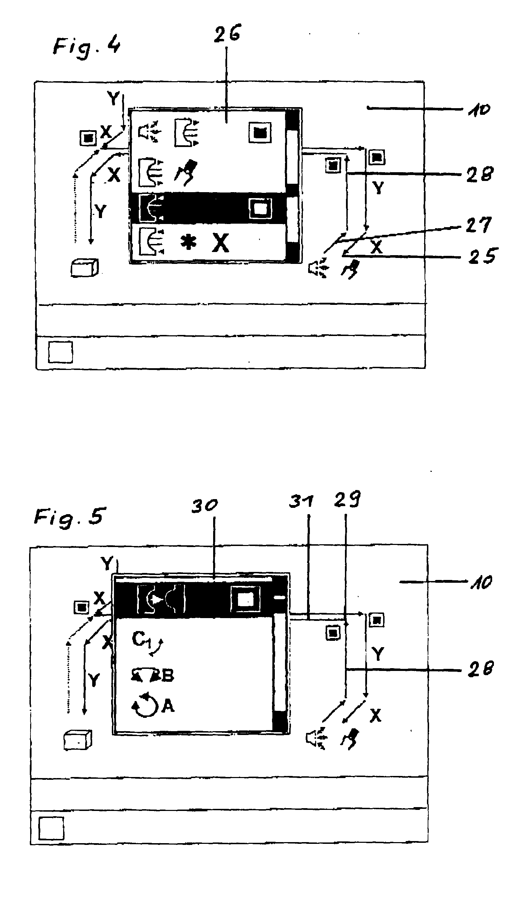

Anschließend wird, wie schon zum Abschnitt 22 erläutert, der Abschnitt 24 in X-Richtung abgefahren. Nach Abschluß dieser Bewegung durch eine entsprechende Bestätigung durch die Bedienungsperson erscheint am Knoten 25 ein weiteres Menü, das sogenannte "Auswerferfenster", wie in Fig. 4 dargestellt ist. Der schwarze Balken wird in der ersten Zeile des Auswerferfensters 26 positioniert (Vakuum + Auswerfer), worauf dieser Menüpunkt aktiviert wird. Es wird damit der Maschine der Befehl erteilt, den anschließend zu definierenden Vakuumkreis an der Entnahmevorrichtung einzuschalten, worauf der Auswerfer den Spritzgußteil auf die Entnahmevorrichtung drückt.

Der Punkt in der dritten Zeile ist bereits in der Grundeinstellung aktiviert (Auswerfer zurückfahren). Statt dessen kann aber auch der vierte Punkt aktiviert werden (Auswerfer zurückfahren und parallel zur X-Achse zurückfahren), wobei in diesem Fall der bereits aktivierte dritte Punkt deaktiviert wird.

Im Bereich des Knotens 25 sowie in der zweiten Zeile des Auswerferfensters 26 ist auch ein zangenförmiger Greifer dargestellt, der als Alternative oder zusätzlich zu einer mittels Vakuum aktivierten Entnahmevorrichtung zum Einsatz kommen könnte.

Nach dem Schließen des Auswerferfensters 26 blinkt der "X zurück"-Pfeil, der den Abschnitt 27 symbolisiert. Beim Anfahren der X-Position wird im Automatikbetrieb gleichzeitig der Auswerfer zurückgefahren.

Anschließend wird, wie in Fig. 5 dargestellt ist, der Abschnitt 28 in Y-Richtung durchlaufen, bis die endgültige Y-Position am Knoten 29 durch die Bedienungsperson bestätigt wird. Es wird automatisch ein weiteres Menü in Form eines Fensters 30 angeboten, in welchem die erste Zeile (Form zu) bereits aktiviert ist. Die tatsächliche Bewegung "Form schließen" erfolgt mit der Bestätigung durch die Bedienungsperson.

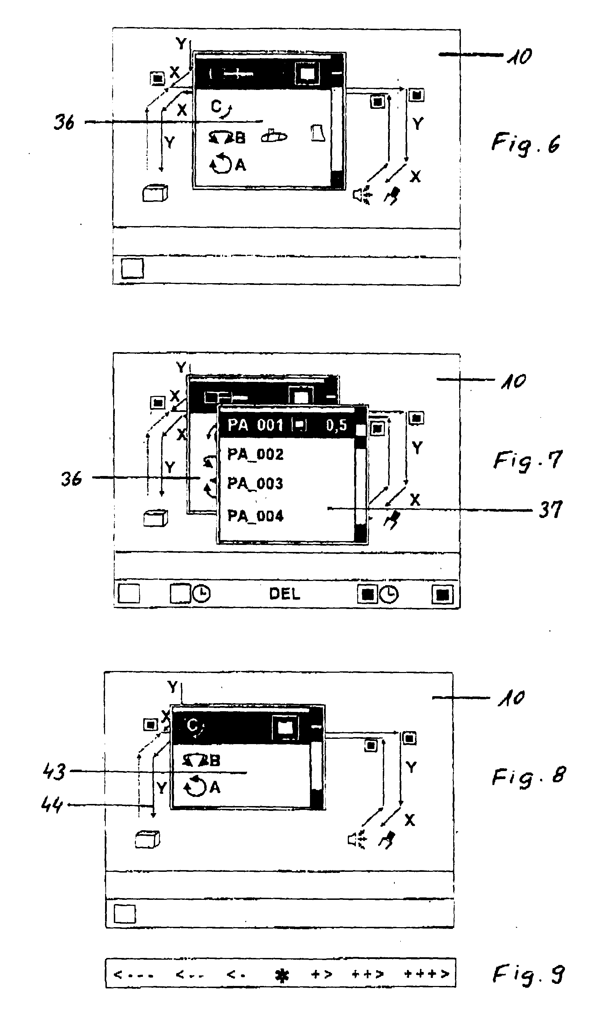

Dann werden die Abschnitte 31, 32, 33 und 34 in Z-, X-, Y- und wieder X-Richtung durchlaufen (Fig. 2). Nachdem die endgültige X-Position des Abschnittes 34 erreicht wurde, wird das nächste Menü 36 am Knotenpunkt 35 geöffnet, um den Peripherieausgang zum Angußschneider 14 zu definieren (Fig. 6). Die erste Zeile des Menüs ist bereits vorgegeben und durch einen Tastendruck wird dieser Punkt definfiert, indem ein weiteres Fenster 37 eingeblendet wird, wie in Fig. 7 gezeigt ist. Es kann nun zum Peripherieausgang 1 ein Zeitwert (z.B. 0,5 sec) zur Zeitverzögerung eingetragen und durch einen Tastendruck bestätigt werden. Während der Eingabe wird der Peripherieausgang durch Betätigung einer Taste (z.B. einer Softkeytaste in der untersten Bildschirmzeile) aktiviert.

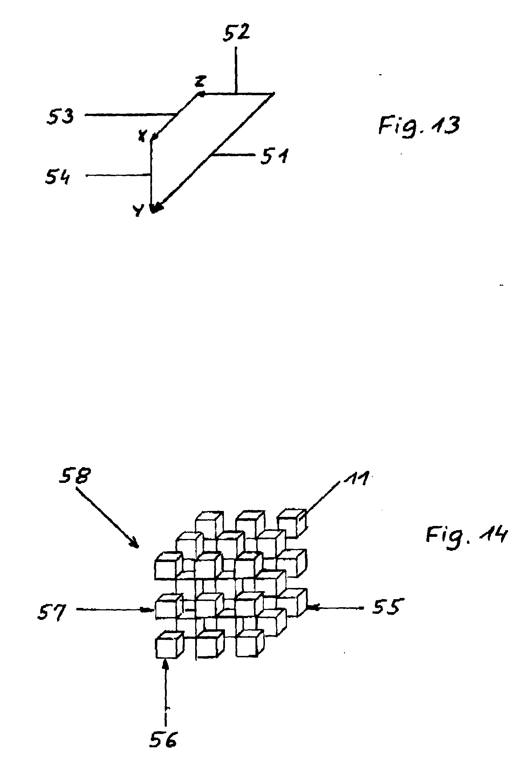

Darsuffolgend werden die Abschnitte 38, 39, 40, 41 und 42 in X-, Y-, X-, Z- und X-Richtung durchlaufen (Fig. 2). Nun kann, wie in Fig. 8 dargestellt ist, ein weiteres Menüfenster 43 angezeigt werden, um die C-Achse zu schwenken. Das Öffnen dieses Menüfensters 43 kann durch Betätigen einer entsprechenden Taste an der Eingabeeinrichtung durchgeführt werden. Durch Bestätigen der ersten Zeile des Menüfensters 43 wird ein überlappendes Fenster gemäß Fig. 9 angezeigt. Durch Drücken einer Sterntaste auf der Tastatur der Eingabeeinrichtung wird die Parallelbewegung mit der nächsten Achse (der Y-Achse) bestätigt und in der Befehlszeile 23 "C 0° + "angezeigt. Mit einen weiteren Tastendruck wird die C-Achse um 90° geschwenkt und am Display 23 "C 90° * " angezeigt. Das überlappende Fenster (Fig. 9) wird geschlossen und im Fenster die Anzeige des C-Balkens auf "C 90° * " geändert. Anschließend wird auch das Menüfenster 43 geschlossen und die Entnahmevorrichtung entlang des Abschnittes 44 in Y-Richtung zur Ablageposition gefahren. Es wird nun ein Menüfenster 45 zum Ausschalten des Vakuums angezeigt und dieser Befehl durch Deaktivieren dieses Punktes bestätigt, worauf das Menüfenster 45 ausgeblendet und der Spritzgußteil 11 abgelegt wird. Nach dem Ablegen des Spritzgußteiles 11 wird der Abschnitt 46 durchlaufen, an dessen Ende 47 durch einen Tastendruck das in Fig. 11 dargestellte Menüfenster 48 für das Aktivieren eines Förderbandes, auf dem der Spritzgußteil 11 abgelegt wurde, aktiviert wird. Im Menüfenster 48 wird die vierte Zeile ausgewählt und bestätigt, wodurch das in Fig. 12 dargestellte Menüfenster 49 eingeblendet wird. Das Menüfenster 49 kann dem Menüfenster 48 schräg überlagernd dargestellt werden. Im Menüfenster 49 wird die Bandlaufzeit (3,0 sec) eingegeben und bestätigt, worauf die Menüfenster 48 und 49 ausgeblendet werden.

Das Förderband wird dann für 3 sec eingeschaltet und die Bedienungsperson kann die Entnahmevorrichtung entlang des Abschnittes 50 zum Knoten 51 bewegen, womit der Lehrvorgang abgeschlossen ist und der ganze Durchlauf der Abschnitte 16 bis 50 automatisch durchgeführt werden kann.

Natürlich ist es nicht nur möglich, Bewegungen parallel zu den X-, Y- und Z-Achsen durchzuführen, sondern auch in einer Ebene, z.B. der X-Y-Ebene, oder im Raum. Um der Bedienungsperson anzuzeigen, daß es sich um einen Bewegungsabschnitt in einer Ebene oder im Raum handelt, kann ein Abschnitt 51, wie in Fig. 13 beispielhaft zu sehen ist, am Bildschirm dargestellt werden. Der Abschnitt 51 von Fig. 13 zeigt eine Bewegung im Raum in Form einer Hauptlinie 51, wobei die Tatsache, daß es sich dabei um eine Bewegung im Raum handelt, durch die Hilfslinien 52, 53 und 54 symbolisiert ist, welche die Z-, X- und Y-Achse angeben. Bei einer Bewegung in einer Ebene würden dementsprechend nur zwei Hilfslinien, z.B. die Hilfslinien 52 und 53, dargestellt sein.

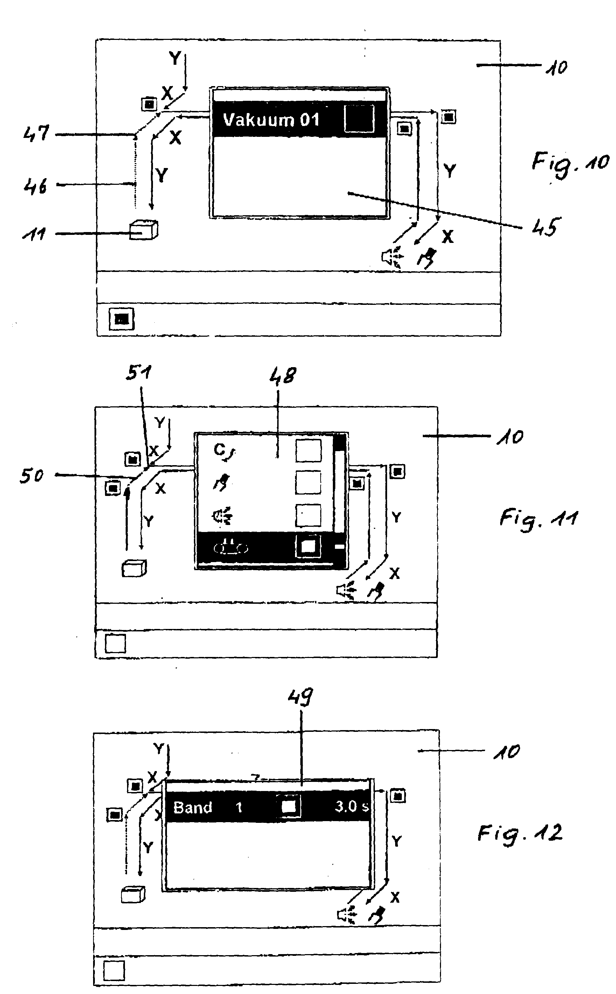

Anstatt der beschriebenen einfachen Ablage eines Teiles, wie mit Bezug auf Fig. 10 erläutert wurde, kann auch ein Ablageprogramm definiert werden, das zum Stapeln von Teilen 11 dient. Der Stapel 58 von Teilen 11 wird durch Angeben von drei Positionen, deren Lage wie in Fig. 14 beispielhaft grafisch dargestellt ist, unter Angabe der abzulegenden Teilt pro Achse definiert.

Dies wird so durchgeführt, daß, nachdem zuerst die Anzahl der Teils 11 angegeben wurde, die erste Ablageposition 55 blinkend dargestellt wird, worauf diese Position im Zuge der Lehrfahrt angefahren wird und bestätigt werden muß. Darauf folgen in gleicher Weise die Positionen 56 und 57. Im Automatikbetrieb werden dann die entnommenen Teile 11 entsprechend der eingegebenen Anzahl und Positionen abgestapelt. Nach dem Fertigetellen eines Stapels 58 kann am Knotenpunkt 47 ein Bandtakt durchgeführt werden, um im Automatikbetrieb einen weiteren Stapel 58 von Teilen 11 abzulegen.

Um während des bereits laufenden Betriebes Änderungen einzelner Positionen vornehmen zu können, können die einzelnen Abschnitte z.B. durch wiederholtes Drücken einer Cursortaste durchlaufen werden, bis man in dem Abschnitt oder Knoten ist, in dem eine Veränderung vorgenommen werden soll. Nachdem der neue Wert eingegeben und bestätigt wurde, wird diese Änderung im nächsten Automatikzyklus berücksichtigt.

Eine andere Möglichkeit ist, den Ablauf des Automatikbetriebes an der gewünschten Stelle zu stoppen, um die Entnahmevorrichtung, wie im Rahmen der Lehrfahrt an die gewünschte Position zu dirigieren und diese zu bestätigen. Anschließend kann der Automatikbetrieb wieder aufgenommen werden. Ebenso wie eine Änderung von Koordinaten im Bewegungsablauf kann auch eine nachträgliche Änderung an Knotenpunkten bzw. Menüs und dort einzugebenden Parameterwerten vorgenommen werden.

Um in Einzelfällen auch Änderungen eines vorgegebenen Bewegungeablaufes bzw. Programmablaufes durchführen zu können, die in einem vorgegebenen Bewegungsablauf oder Menü nicht angeboten werden, ist es möglich, den vom Computer bzw. Prozessor der Programmsteuerung erstellten Quellencode zu editieren und eine direkte Änderung im Quellencode vorzunehmen.

## Patentansprüche

1. Verfahren zum Durchführen einer Lehrfahrt eines Handhabungsgerätes, insbesondere einer Entnahmevorrichtung für Spritzgußteile aus einer Spritzgießmaschine, bei dem das Handhabungsgerät mittels einer Eingabeeinrichtung entlang eines vorgege-. benen Bewegungsablaufes bewegt wird, dadurch gekennzeichnet, daß der Bewegungsablauf an einem Bildschirm einer Anzeigeeinrichtung schematisch angezeigt wird.

2. Verfahren nach Anspruch 1, dadurch gekennzeichnet, daß der Abschnitt des Bewegungsablaufes, den das Handhabungsgerät gerade durchläuft, hervorgehoben dargestellt wird.

3. Verfahren nach Anspruch 2, dadurch gekennzeichnet, daß der Abschnitt des Bewegungsablaufes, den das Handhabungsgerät gerade durchläuft, blinkend dargestellt wird.

4. Verfahren nach einem der Ansprüche 1 bis 3, dadurch gekennzeichnet, daß zuerst ein Bewegungsablauf des Handhabungsgerätes aus wenigstens zwei vorgegebenen Bewegungsabläufen ausgewählt wird und daß das Handhabungsgerät anschließend mittels der Eingabeeinrichtung entlang des ausgewählten Bewegungsablaufes bewegt wird.

5. Verfahren nach einem der Ansprüche 1 bis 4, dadurch gekennzeichnet, daß an Knotenpunkten des Bewegungsablaufes eine Eingabemöglichkeit zur Änderung des Bewegungsablaufes gegeben ist, und daß nach einer Änderung der geänderte Bewegungsablauf am Bildschirm angezeigt wird.

6. Verfahren nach einem der Ansprüche 1 bis 5, dadurch gekennzeichnet, daß insbesondere an Knötenpunkten des Bewegungsablaufes Menüs aufgerufen werden können, aus welchen Steuerbefehle, insbesondere für bzw. von Peripheriegeräten, ausgewählt und gespeichert werden können.

7. Verfahren nach Anspruch 6, dadurch gekennzeichnet, daß nach Auswahl von Menüpunkten Untermenüs für die Auswahl von Steuerbefehlen oder Eingabefenster für Parameterwerte angezeigt

8. Verfahren nach einem der Ansprüche 1 bis 6, dadurch gekennzeichnet, daß der Bewegungsablauf anhand von X-Y-Z-Achsen vorgegeben ist und die Bewegung des Handhabungsgerätes parallel zu diesen Achsen verläuft.

9. Verfahren nach einem der Ansprüche 1 bis 8, dadurch gekennzeichnet, daß der Abschnitt einer Bewegung in einer Ebene oder im Raum durch eine gerade Hauptlinie sowie die Bewegung in der Ebene oder im Raum symbolisierende Hilfelinien dargestellt wird.

10. Verfahren nach einem der Ansprüche 1 bis 9, dadurch gekennzeichnet, daß nach Beendigung der Lehrfahrt ein Quellencode erstellt wird, der editierbar und veränderbar ist.

11. Verfahren nach einem der Ansprüche 1 bis 10, dadurch gekennzeichnet, daß ein Ablageprogramm durch Ausführen der Schritte
- Eingeben der Teilezahl einer ersten Achse und Definieren einer ersten Ablageposition
- Eingeben der Teilezahl einer zweiten Achse und Definieren einer zweiten Ablageposition
- Eingeben einer Teilezahl einer dritten Achse und Defifnisren einer dritten Ablageposition
definiert wird.
